# EUROPÄISCHE PATENTANMELDUNG

(11) **EP 2 251 076 A2**
(43) Veröffentlichungstag der Anmeldung: **17.11.2010**
(21) Anmeldenummer: 10162235.5
(22) Anmeldetag: 07.05.2010
(51) Int. Cl.: B01J 2/00

(54) **Verfahren zur Herstellung beschichteter Granulatpartikel, beschichtete Granulatpartikel und deren Verwendung**

(30) Priorität: 07.05.2009 DE 102009020201
(71) Anmelder: Gebrüder Dorfner GmbH & Co. Kaolin- und Kristallquarzsandwerke KG, 92242 Hirschau (DE)
(72) Erfinder: Dr./Dipl.-Chem. DeLong, Anja, 93197, Zeitlarn (DE); Flierl, Michael, 92242, Hirschau (DE)
(74) Vertreter: Hannke, Christian

(57) **Zusammenfassung**

Die Erfindung betrifft ein Verfahren zum Beschichten einer Oberfläche organischer und/oder anorganischer Materialien, wobei die organischen und/oder anorganischen Materialien in Form von Granulatpartikeln vorliegen. Weiterhin betrifft die Erfindung beschichtete Granulatpartikel, deren Oberfläche eine erhitzte Beschichtung aus einer Bindemittelzubereitung aufweist. Außerdem betrifft die Erfindung die Verwendung von derartigen beschichteten Granulatpartikeln als Füllstoff.

## Beschreibung

Die Erfindung betrifft ein Verfahren zum Beschichten einer Oberfläche organischer und/oder anorganischer Materialien, wobei die organischen und/oder anorganischen Materialien in Form von Granulatpartikeln vorliegen. Weiterhin betrifft die Erfindung beschichtete Granulatpartikel, deren Oberfläche eine erhitzte Beschichtung aus einer Bindemittelzubereitung aufweist. Außerdem betrifft die Erfindung die Verwendung von derartigen beschichteten Granulatpartikeln als Füllstoff.

Granulare Materie oder auch Granulate sind weit verbreitet und haben vielfältige Anwendungsmöglichkeiten. So werden beispielsweise Kunststoffgranulate in der kunststoffverarbeitenden Industrie als Ausgangsmaterial für Spritzguss- oder Extrusionsprozesse verwendet. Aufgrund der verhältnismäßig großen Oberfläche der Granulatpartikel und der damit verbundenen hohen Belastung, beispielsweise bei Schüttvorgängen, sind die Oberflächen oft stark strapaziert. Daher ist es oft zweckmäßig, Granulate zu beschichten.

Auch für die Verwendung als Effektelemente werden Granulate zunehmend verwendet. Sie werden beispielsweise zur Verwendung in einer organischen Matrix (z.B. Epoxidharz) oder einer anorganischen Matrix (z.B. hydraulische Systeme) eingebettet und zur Beschichtung von Fußboden- oder Wandflächen eingesetzt. Je nach Kundenwunsch und/oder Anforderungen können diese Granulate mit speziellen Effektpigmenten beschichtet sein, beispielsweise gefärbt sein.

Eine mögliche Anwendung besonders hochwertiger Granulate als Effektelemente ist die Verwendung in polymeren Verbundwerkstoffen. Bei der Herstellung qualitativ hochwertiger Küchenspülen oder Waschbecken auf Basis acrylat- oder polyestergebundener Polymere werden zunehmend spezielle Granulate als Effektpigmente verwendet. Die hierfür eingesetzten Granulate sind üblicherweise farbig und werden in das Polymer eingebettet. Beispiele hierfür sind Granucol SIG, DURA und FFB. Das Färben der Pigmente erfolgt meist durch Beschichtung mit einem anorganischen Bindemittel, in welches das farbige Pigmente eingebunden wird. Nach dem Stand der Technik werden Alkalisilikatlösungen als Bindemittel und Quarzsand als Trägermaterial verwendet. In einem Brennprozess bindet die Alkalisilikatlösung an die Quarzoberfläche und generiert so eine dauerhafte farbige Beschichtung des Granulatpartikels. Während des Brennvorgangs, welcher üblicherweise bei Temperaturen oberhalb von etwa 200°C stattfindet, erfolgt eine chemische Bindung der Alkalisilikatlösung und der Pigmentpartikel mit der Quarzoberfläche, wodurch eine dauerhafte farbige Beschichtung generiert wird.

Bei niedrigeren Brenntemperaturen von beispielsweise < 200°C sinkt die Belastbarkeit der beschichteten Pigmente drastisch, da keine ausreichend stabile Beschichtung erzeugt wurde. Die bei diesen niedrigen Temperaturen gebrannte Alkalisilikatschicht bildet nicht ausreichend stabile chemische Bindungen aus und kann sich, vor allem bei Kontakt mit Wasser oder organischen Lösemitteln, zersetzen und sich dadurch im Laufe der Zeit wieder von der Oberfläche lösen. Dies hat unter anderem die Ablösung der in der Alkalisilikatschicht eingebundenen Farbpigmente sowie eine Erhöhung des pH-Wertes zur Folge. Beides ist bei der Verarbeitung und späteren Verwendung der Farbgranulate, insbesondere wenn die oben genannten, besonders hochwertigen Qualitäten gefordert sind, in hohem Maße unerwünscht.

Bisher wurde dieses teilweise Ablösen der Alkalisilikatschicht von der Granulatoberfläche vermieden, indem die Brenntemperatur erhöht wurde. Dadurch weisen die derart hergestellten Alkalisilikatschichten zwar eine verbesserte Haftung und eine geringere Löslichkeit gegenüber Wasser und organischen Lösemitteln auf und reagieren mit Wasser deutlich weniger stark alkalisch, weisen jedoch auch eine Reihe negativer Eigenschaften auf. Oft kommt es zu unerwünschten Farbverschiebungen, da die eingesetzten Farbpigmente bei derartig hohen Temperaturen zumindest teilweise nicht mehr farbstabil sind. Außerdem erfordert dieses Verfahren einen deutlich höheren Energieaufwand, was die Kosten derartig gefärbter Granulatpartikel erhöht.

Die Druckschrift US 2 927 045 offenbart beispielsweise anorganische farbige Granulate, sowie ein Verfahren zur Herstellung dieser Granulate. Die Oberfläche der Granulatpartikel wird mittels eines Bindemittels mit Farbpigmenten beschichtet. Als Bindemittel wird Alkalisilikat verwendet. Die dauerhafte Fixierung der Farbpigmente auf der Oberfläche der Granulatpartikel erfolgt durch direkte Erhitzung innerhalb eines Drehrohrofens.

Ebenso offenbart die Druckschrift US 5 362 566 A anorganische farbige Granulate sowie ein Verfahren zur deren Herstellung. Neben einem Bindemittel und Pigmenten werden der Beschichtung gegebenenfalls Additive zugesetzt. Auch hier erfolgt die dauerhafte Fixierung der Farbpigmente auf der Oberfläche der Granulatpartikel durch direkte Erhitzung innerhalb eines Drehrohrofens.

In der Druckschrift DE 40 18 619 A1 ist ein Verfahren zur oberflächlichen Färbung von Sanden und anderen mineralischen Stoffen unter Verwendung eines Methylsilikonharzes, Methylphenylsilikonharzes oder Polysiloxan-Polyesterharzes in organischem Lösemittel offenbart. Die Fixierung der Farbbeschichtung erfolgt durch Abdampfen des Lösemittels bei Raumtemperatur. Des Weiteren wird die Einarbeitung dieser Farbsande in Kunstharzputze und Mosaike offenbart.

Ein Verfahren zur Oberflächenbehandlung von Granulaten für asphaltbasierte Dachschindeln mit Polysiloxan wird in der Druckschrift US 5 240 760 offenbart. Eine derartige Oberflächenbehandlung erfolgt, um die Granulate Wasser- und Öl-abweisend einzustellen und die Staubablagerung auf derartig beschichteten Granulaten zu reduzieren.

In der Druckschrift JP 3 122 075 A ist die Herstellung von mehrfarbigen Zementoberflächen beschrieben. Erreicht wird die Färbung durch das Einstreuen von farbigen Sanden, welche mit einem Silikonharz überzogen wurden. Damit soll erreicht werden, dass die anschließend auf die Oberfläche aufgetragene Acrylfarbe von den eingestreuten farbigen Sandkörnern abperlt und nur die ungefärbte Zementoberfläche zwischen den Granulatpartikeln eingefärbt wird.

Die Verfahren nach dem Stand der Technik sind nicht geeignet, um eine ausreichende Stabilität der beschichteten Granulate gegenüber wässrigen Medien und organischen Lösemitteln zu erreichen, wenn besonders hochwertige Qualitäten für die oben genannten Anwendungen gefordert sind. Besonders der hohe Energieaufwand, die unzureichende Farbtreue und/oder rheologische Aspekte stehen einer Verwendung derartiger Verfahren zur Herstellung von Effektpartikeln entgegen.

Aufgabe der vorliegenden Erfindung ist es daher, ein Verfahren zum Beschichten einer Oberfläche organischer und/oder anorganischer Materialien in Form von Granulatpartikeln bereitzustellen, wobei zur Vermeidung von Farbverschiebungen hohe Brenntemperaturen vermieden werden sollen und dennoch eine ausreichende Langzeitbeständigkeit hinsichtlich der Löslichkeit in wässrigen und organischen Medien gewährleistet werden soll.

Als besonders vorteilhaft hat sich zur Lösung dieser Aufgabe die Verwendung eines hybriden Bindemittels herausgestellt, dessen Moleküle sowohl anorganischen als auch organischen (bzw. polaren als auch unpolaren) Charakter haben und welches bei niedrigen Brenntemperaturen eine verbesserte Stabilität der farbigen Granulatprodukte hinsichtlich der Löslichkeit in wässrigen Medien und organischen Lösemitteln bietet. Daher ist ein Gegenstand der vorliegenden Erfindung ein Verfahren zum Beschichten einer Oberfläche organischer und/oder anorganischer Materialien, wobei die organischen oder anorganischen Materialien in Form von Granulatpartikeln vorliegen und das Verfahren die Schritte umfasst: Herstellung einer Bindemittelzubereitung, welche mindestens ein Lösemittel und mindestens ein hybrides Bindemittel umfasst, Auftragen einer vorbestimmten Menge der Bindemittelzubereitung auf der Oberfläche der Granulatpartikel und Erzeugung der Verbindungen zwischen dem hybriden Bindemittel und der Oberfläche durch Temperieren auf Temperaturen zwischen 200°C und 800°C.

Durch dieses Verfahren ist es möglich, Granulatpartikel dauerhaft mit einer ausrechend stabilen Beschichtung zu versehen und gleichzeitig in vielen Fällen eine eventuelle Farbverschiebung durch ein Erhitzen der verwendeten Farbstoffe auf sehr hohe Temperaturen zu vermeiden. Als Lösemittel werden organische Lösemittel verwendet.

In einer besonderen Ausführungsform zeichnet sich das Verfahren dadurch aus, dass die zu behandelnde Oberfläche die Oberfläche eines Partikels eines anorganischen Materials wie beispielsweise Glasgranulat, Glasperlen, Glasfasern, Quarz, Quarzsand, Dolomit, Calziumcarbonat, Glimmer, Mica, Schiefer, Schiefersplitt, Feldspat und/oder Wollastonit und/oder eines organischen Materials wie beispielsweise Kunststoffgranulat oder Kautschukgranulat ist. Diese Materialien eigenen sich besonders gut für die Einbettung in hochwertige acrylat- oder polyesterbasierende Polymere und damit für die Herstellung besonders hochwertiger und strapazierfähiger Oberflächen.

Die in dem Verfahren beschichteten Granulatpartikel weisen in einer bevorzugten Ausführungsform einen durchschnittlichen Partikeldurchmesser von 0,01 mm bis 30 mm, bevorzugt von 0,03 mm bis 20 mm, noch bevorzugter von 0,05 bis 10 mm und besonders bevorzugt von 0,1 mm bis 5 mm auf. Granulatpartikel dieser Größe lassen sich besonders gut beschichten und sind nach dem Einbetten in Polymere gut zu erkennen, so dass sie als Effektpartikel besonders gut zur Geltung kommen. Die Größe der Granulatpartikel kann dabei je nach Kundenwunsch unterschiedlich gewählt sein. Je nach gewünschter Ausführung können eine Vielzahl kleiner Granulatpartikel oder eine kleinere Anzahl großer Granulatpartikel als Effektpartikel in Polymere eingebettet werden.

In einer weiteren bevorzugten Ausführungsform des Verfahrens ist mindestens ein hybrides Bindemittel ein Silikonharz. Diese sind mit ihrem anorganischen- und organischen Charakter besonders als hybride Bindemittel geeignet.

Als für die Bindemittelzubereitung besonders geeignet haben sich arylhaltige Silikonharze, z.B. Methyl-Phenyl-Harze, insbesondere funktionelle Methyl-Phenyl-Harze, z.B. silanol-, methoxy- oder ethoxyfunktionelle Methyl-Phenyl-Harze als hybride Bindemittel erwiesen. Daher zeichnet sich eine besonders bevorzugte Ausführungsform des Verfahrens dadurch aus, dass das Silikonharz ein arylhaltiges Silikonharz, wie Methylphenylsilikonharz ist, welches optional silanol-, methoxy- oder ethoxyfunktionalisiert vorliegt.

Um die gewünschten rheologischen Eigenschaften der Bindemittelzusammensetzung zu erreichen ist es wichtig, das entsprechende Verhältnis von Bindemittel und Lösungsmittel sowie eventuell zugesetzten Additiven einzustellen. Nur so ist eine ausreichend starke, gleichmäßige Beschichtung der Granulatpartikeloberflächen möglich. In einer bevorzugten Ausführungsform zeichnet sich das Verfahren daher dadurch aus, dass die Bindemittelzubereitung mindestens ein hybrides Bindemittel in einem Massenanteil von 1 Ma-% bis 95 Ma-%, bevorzugt von 10 Ma-% bis 80 Ma-% und besonders bevorzugt von 20 Ma-% bis 60 Ma-% und mindestens ein unpolares und/oder mindestens ein polares organisches Lösemittel umfasst.

Durch den hybriden Charakter des Bindemittels ist sowohl die Verwendung von unpolaren als auch polaren Lösemitteln möglich. Welches Lösemittel für die Beschichtung einer Granulatpartikeloberfläche besonders geeignet ist, hängt von der Art der Granulatpartikeloberfläche und des optional zugesetzten Effektpigments, beispielsweise des Farbpigments ab. Die Polarität des Lösemittels kann individuell auf die Anforderungen der Granulatpartikeloberfläche-Effektpigment-Kombination abgestimmt werden. Der Mischvorgang der einzelnen Komponenten zu Erzeugung der Bindemittelzubereitung kann mittels der bekannten zur Verfügung stehenden Mischmethoden erfolgen.

In einer bevorzugten Ausführungsform des Verfahrens enthält die Bindemittelzubereitung ein organisches Lösemittel, welches aus einer Gruppe ausgewählt ist, welche Isopropanol, Methoxypropylacetat, Methoxypropanol und/oder Xylol umfasst.

Oft ist außer der Oberflächenversiegelung eine weitere Änderung der Granulatpartikeloberfläche erwünscht. Es kann sich dabei beispielsweise um eine Änderung der Reflexionseigenschaften oder Hydrophobierung oder - wie bereits eingangs erwähnt - um eine Färbung der Oberfläche handeln. In einer bevorzugten Ausführungsform umfasst das Verfahren das Zusetzen mindestens eines Farbstoffes und das hybride Bindemittel, welches dazu geeignet ist, den Farbstoff auf der Oberfläche zu binden.

Um Farbverschiebungen zu vermeiden, ist in einer bevorzugten Ausführungsform des Verfahrens der mindestens eine Farbstoff ein Farbpigment, welches seine Farbe während und/oder in Folge des Temperierens nicht oder nur unwesentlich ändert. Durch die im Vergleich zum Stand der Technik geringeren Temperaturen, die notwendig sind, um eine dauerhafte Stabilität der Oberflächenbeschichtung zu gewährleisten, ist hier eine breite Palette an kommerziell erhältlichen Farbstoffen möglich.

Farbstoffe können hierbei sowohl reine Pigmente als auch Mischungen unterschiedlicher Farbstoffe sein. Als Farbstoffe sind alle Farbstoffe, insbesondere Pigmente, geeignet, die nach dem Brennvorgang die gewünschte Farbe erzielen. Somit ist es möglich, den gewünschten Farbton erst durch das Erhitzen und das damit verbundene Vermischen, Verschmelzen bzw. Reagieren der unterschiedlichen Farbpigmente zu erzielen. Auch die chemische Reaktion von Molekülen zur Ausbildung eines gewünschten Farbstoffes ist möglich. Bevorzugt sind jedoch Farbstoffe, die durch den Einbrennvorgang nicht zersetzt werden, beziehungsweise die Farbe nicht oder nur unwesentlich ändern. Als Farben werden in diesem Zusammenhang alle Farben der Farbskala verstanden, sowie auch Effektfarben, die besondere Wirkungen, z. B. Lichtbrechungen oder Interferenzen, auf der Oberfläche hervorrufen.

In einer bevorzugten Ausführungsform des Verfahrens erfolgt das Temperieren in einem beheizten Ofen, wie beispielsweise einem Drehrohrofen. Prinzipiell sind hierfür alle geeigneten Öfen anwendbar. Ein Drehrohrofen hat jedoch den Vorteil, dass während des Brennvorganges eine gleichmäßige Durchmischung der Granulatpartikel erfolgt und somit beispielsweise eine homogene Beschichtungsstärke und Farbverteilung gewährleistet werden kann, was wiederum zum Einstellen einer sehr genau definierten Produktqualität genutzt werden kann. Der Ofen wird bevorzugt indirekt beheizt. Die Beheizung ist dabei elektrisch möglich, jedoch auch mit heißen Gasen, z. B. Brenngasen aus einer Verbrennung oder heißen Abgasen aus anderen Prozessen. Nach dem Einbrennen der Schicht bei erhöhten Temperaturen im Ofen wird das Material abgekühlt und kann weiterverarbeitet werden.

Bevorzugt werden im Vergleich zum Stand der Technik geringere Temperaturen für den Brennprozess verwendet. Daher zeichnet sich eine bevorzugte Ausführungsform des Verfahrens dadurch aus, dass das Temperieren bei Temperaturen von mindestens 200°C, bevorzugt von mindestens 220°C, noch bevorzugter von 250°C bis 800°C und besonders bevorzugt von 270°C bis 500°C erfolgt. Durch diese verhältnismäßig moderarten Temperaturen von besonders bevorzugt unter 500°C ist die Verwendung einer großen Anzahl verschiedener kommerziell erhältlicher Farbstoffe möglich, ohne dass störende Farbverschiebungen auftreten. Damit kann zum Färben nach dem erfindungsgemäßen Verfahren auch auf günstigere Farbstoffe zurückgegriffen werden, die den Brenntemperaturen der bisherigen Verfahren nicht unbeschadet ausgesetzt werden können. Die damit verbundenen Kosteneinsparungen, besonders in Kombination mit den Energieeinsparungen durch die geringen Brenntemperaturen, können die eventuell anfallenden Mehrkosten für die hybriden Bindemittel dämpfen.

In einer bevorzugten Ausführungsform des Verfahrens erfolgt das Temperieren während einer Verweilzeit von 1 Min. bis 2 Std., bevorzugt von 5 Min. bis 90 Min. und besonders bevorzugt von 5 Min. bis 60 Min. Die Verweilzeiten sind abhängig von der zu beschichtenden Oberfläche, dem verwendeten Bindemittel, dem Pigment, eventuell zugesetzten Additiven, dem verwendeten Lösemittel sowie dessen Mengenanteil. Trotz der gegenüber dem Stand der Technik reduzierten Brenntemperaturen ist es nicht notwendig die Verweilzeiten drastisch zu verlängern. Die Bevorzugten Verweilzeiten von weniger als 2 Stunden, besonders bevorzugt von weniger als 60 Minuten, sind bei den reduzierten Temperaturen für eine Vielzahl von Farbstoffen akzeptabel, ohne dass gravierende Farbverschiebungen auftreten.

Ein weiterer wesentlicher Gegenstand der Erfindung sind beschichtete Granulatpartikel, deren Oberfläche eine auf Temperaturen zwischen 200°C und 800°C erhitzte Beschichtung aus einer Bindemittelzubereitung, welche mindestens ein organisches Lösemittel und mindestens ein hybrides Bindemittel umfasst, aufweist. Derartige Granulatpartikel weisen durch ihre Beschichtung wie auch das hybride Bindemittel selbst einen verhältnismäßig hybriden Charakter auf. Dadurch können diese Granulatpartikel leicht sowohl in anorganische als auch in organische Matrizes eingebettet werden. Die dauerhafte Beschichtung schützt diese Granulatpartikel vor schneller Zersetzung bei Kontakt mit polaren und/oder unplaren Lösemittel und macht sie gleichzeitig strapazierfähig und damit leicht handhabbar.

Daher ist ein weiterer wesentlicher Gegenstand der Erfindung die Verwendung derartiger beschichteter Granulatpartikel als Füllstoff in anorganischer oder organischer Matrix wie Gießmassen und/oder Verbundwerkstoffen. Wie bereits eingangs beschrieben, können derartige Matrizes und/oder Verbundstoffe durch die eingebetteten Granulatpartikel in Ihren Eigenschaften modifiziert werden. Als Effektpartikel können die Granulatpartikel beispielsweise die Reflexion, Lichtstreuung, Farbe, Absorptionsverhalten gegenüber jeglicher Strahlung (je nach verwendeter Beschichtung auch beispielsweise UV-, Röntgen-, oder auch ionisierender Strahlung) und/oder Lichtstreuung beeinflussen. Somit bieten derartige Gießmassen und/oder Verbundwerkstoffe Vorteile bei einer Vielzahl von Anwendungsbereichen. Besonders im Baugewerbe, dem Möbelbau und der Medizin können derartige Materialien als Fliesen, Kacheln, Dämmplatten, Isolationsmaterial, Designobjekt, Küchenspülen, Waschbecken, Tisch-und Arbeitsplatten, Sanitäreinrichtungen u.ä. angewendet werden.

Anhand der in den Tabellen dargestellten Versuchsergebnisse werden nachfolgend Ausführungsbeispiele der Erfindung mit Bezugnahme auf Produkteigenschaften beschrieben, die hinsichtlich des Einsatzgebietes wesentlich sind. Die Ausführungsbeispiele dienen nur zur Illustration und schränken die vorliegende Erfindung nicht ein.

### Beispiele

### Beispiel 1:

Eine Bindemittelzubereitung wird für die Beschichtung vorbereitet, indem 50 Ma.-% ethoxyfunktionellem Methyl-Phenyl-Harz und 50 Ma.-% Isopropanol miteinander verrührt werden.

Daraufhin werden in einem Intensivmischer 100 kg eines Quarzsandes mit einer Körnung von 0,3 bis 0,8 mm mit 2 kg dieser Bindemittelzubereitung und 2 kg Titandioxidpigment vermengt.

Anschließend wird die Mischung in einen beheizten Drehrohrofen überführt und dort bei ca. 300°C für ca. 15 Min. temperiert, wobei sich eine homogene Beschichtung auf der Pigmentpartikeloberfläche ausbildet.

Nach dem Abkühlen der Mischung wird das erhaltene beschichtete Granulat verschiedenen Tests unterzogen.

### Beispiel 2:

Eine Bindemittelzubereitung bestehend aus 40 Ma.-% silanolfunktionellem Methyl-Phenyl-Harz mit 60 Ma.-% Methoxypropanol wird durch Verrühren hergestellt und für die Beschichtung vorbereitet.

100 kg eines Quarzsandes mit der Körnung von 0,1 bis 1 mm werden zu 1,5 kg dieser Bindemittelzubereitung zugegeben und weitere 1,5 kg schwarzem Eisenoxidpigment als Farbpigment zugesetzt. Diese Mischung wird in einem Intensivmischer vermengt, bis homogen beschichtete Granulatpartikel vorliegen.

Anschließend wird die Mischung in einen beheizten Drehrohrofen überführt und dort für ca. 20 Min. auf ca. 300°C erhitzt. Es bildet sich dabei eine dauerhafte homogene Beschichtung auf der Pigmentpartikeloberfläche aus.

Nach dem Abkühlen der Mischung kann das beschichtete Granulat Qualitätstests unterzogen werden.

### Test 1:

Ein wesentliches Qualitätskriterium ist die Beständigkeit gegenüber polaren Lösemitteln. Dazu wird die Pigmenthaftung bei wässriger Exposition ermittelt. Die resultierende Trübung des Wassers nach dem Test wird photometrisch gemessen und stellt somit ein direktes Maß für die Pigmenthaftung dar. Es zeigt sich, dass das erfindungsgemäße, mit Silikonharz eingefärbte Granulat im Vergleich zu mit Alkalisilikat beschichteten Vergleichsproben beständiger gegenüber Wasser ist.

### Test 2:

Um die Verarbeitungsmöglichkeit in Monomeren und Systemen zu bestimmen, die organische Lösemittel enthalten, werden farbig beschichtete Granulatpartikel in Reagenzgläser eingewogen. Zum Vergleich der Beständigkeit gegenüber verschiedenen Lösemitteln werden diese Proben mit den Lösemitteln Wasser, Reinacrylatlösung, Aceton, Methylmethacrylat (MMA) und Butyldiglykol versetzt.
Deutlich ist bei dem erfindungsgemäßen ausreagiertem Silikonharzbindemittel die Verbesserung der Lösemittelbeständigkeit gegenüber alkalisilikatbeschichteten Vergleichspartikeln zu erkennen.

### Test 3:

Als ein weiteres wichtiges Kriterium zur Ermittlung der Qualität einer Beschichtung kann die Neigung zur Wassereinlagerung (Blushing) herangezogen werden. Dazu werden Musterplättchen mit Methylmethacrylat-Bindemittel hergestellt und auf einen wasserbefüllten Erlenmeyerkolben gelegt. Das Wasser wird stark erhitzt und somit der Prüfkörper dem aufsteigendem heißem Wasserdampf ausgesetzt. Die Wassereinlagerung führt zu einer Aufhellung der Materialoberfläche, welche photometrisch erfasst wird. Bei der erfindungsgemäßen Verwendung von Silikonharzbindemittel wird eine deutliche Verbesserung erzielt.

### Test 4:

Das Sedimentationsverhalten in Gießmassen für die Verbundwerkstoffindustrie ist ein weiteres wichtiges Qualitätskriterium der farbigen Granulate. In der Verbundwerkstoffindustrie werden bisher überwiegend Alkalisilikat gebundene Farbgranulate eingesetzt, die Rezepturen und Prozesse der Kunden sind oft bereits auf das Sedimentationsverhalten dieser Produkte eingestellt. Daher sollten auch neue Granulate ein ähnliches Sedimentationsverhalten aufweisen, um ohne größere Umstellungen in den bisherigen Verfahren eingesetzt werden zu können.

Das Fließ- und Sedimentationsverhalten der erfindungsgemäß beschichteten Granulatpartikel ist dem von alkalisilikatbeschichteten Granulatpartikeln nahezu identisch. Deutlich unterschiedlich davon ist das rheologische Verhalten der Kunstharzbeschichteten (Polyurethan, Epoxid) Granulatpartikel, welche eine wesentlich stärkere Sedimentation zeigen.

Sämtliche in den Anmeldungsunterlagen offenbarten Merkmale werden als erfindungswesentlich beansprucht, sofern sie einzeln oder in Kombination gegenüber dem Stand der Technik neu sind.

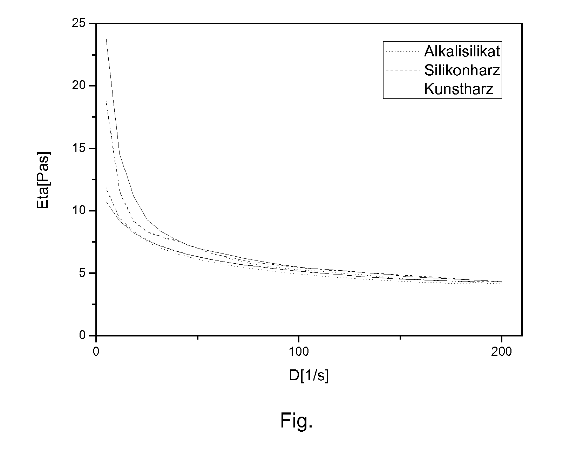

## Patentansprüche

1. Verfahren zum Beschichten einer Oberfläche organischer und/oder anorganischer Materialien, wobei die organischen oder anorganischen Materialien in Form von Granulatpartikeln vorliegen und das Verfahren die Schritte umfasst:
- Herstellung einer Bindemittelzubereitung, welche mindestens ein Lösemittel und mindestens ein hybrides Bindemittel umfasst;
- Auftragen einer vorbestimmten Menge der Bindemittelzubereitung auf der Oberfläche der Granulatpartikel; und
- Erzeugung der Verbindungen zwischen dem hybriden Bindemittel und der Oberfläche durch Temperieren auf Temperaturen zwischen 200°C und 800°C.

2. Verfahren nach Anspruch 1,
**dadurch gekennzeichnet, dass**
die zu behandelnde Oberfläche die Oberfläche eines Partikels eines anorganischen Materials wie beispielsweise Glasgranulat, Glasperlen, Glasfasern, Quarz, Quarzsand, Dolomit, Calziumcarbonat, Glimmer, Mica, Schiefer, Schiefersplitt, Feldspat und/oder Wollastonit und/oder eines organischen Materials wie beispielsweise Kunststoffgranulat oder Kautschukgranulat ist.

3. Verfahren nach einem der vorangegangenen Ansprüche,
**dadurch gekennzeichnet, dass**
die Granulatpartikel einen durchschnittlichen Partikeldurchmesser von 0,01 mm bis 30 mm, bevorzugt von 0,03 mm bis 20 mm, noch bevorzugter von 0,05 bis 10 mm und besonders bevorzugt von 0,1 mm bis 5 mm aufweisen.

4. Verfahren nach einem der vorangegangenen Ansprüche,
**dadurch gekennzeichnet, dass**
mindestens ein hybrides Bindemittel ein Silikonharz ist.

5. Verfahren nach Anspruch 4,
**dadurch gekennzeichnet, dass**
das Silikonharz ein arylhaltiges Silikonharz, wie Methylphenylsilikonharz ist, welches optional silanol-, methoxy- oder ethoxyfunktionalisiert vorliegt.

6. Verfahren nach einem der vorangegangenen Ansprüche,
**dadurch gekennzeichnet, dass**
die Bindemittelzubereitung mindestens ein hybrides Bindemittel in einem Massenanteil von 1 Ma-% bis 95 Ma-%, bevorzugt von 10 Ma-% bis 80 Ma-% und besonders bevorzugt von 20 Ma-% bis 60 Ma-% und mindestens ein unpolares und/oder mindestens ein polares organisches Lösemittel umfasst.

7. Verfahren nach Anspruch 6,
**dadurch gekennzeichnet, dass**
das organische Lösemittel aus einer Gruppe ausgewählt ist, welche Isopropanol, Methoxypropylacetat, Methoxypropanol und/oder Xylol umfasst.

8. Verfahren nach einem der vorangegangenen Ansprüche,
**dadurch gekennzeichnet, dass**
das Verfahren das Zusetzen mindestens eines Farbstoffes umfasst und das hybride Bindemittel dazu geeignet ist, den Farbstoff auf der Oberfläche zu binden.

9. Verfahren nach Anspruch 8,
**dadurch gekennzeichnet, dass**
der mindestens eine Farbstoff ein Farbpigment ist, welches seine Farbe während und/oder in Folge des Temperierens nicht oder nur unwesentlich ändert.

10. Verfahren nach einem der vorangegangenen Ansprüche,
**dadurch gekennzeichnet, dass**
das Temperieren in einem beheizten Ofen, wie beispielsweise einem Drehrohrofen erfolgt.

11. Verfahren nach einem der vorangegangenen Ansprüche,
**dadurch gekennzeichnet, dass**
das Temperieren bei Temperaturen von mindestens 200°C, bevorzugt von mindestens 220°C, noch bevorzugter von 250°C bis 800°C und besonders bevorzugt von 270°C bis 500°C erfolgt.

12. Verfahren nach einem der vorangegangenen Ansprüche,
**dadurch gekennzeichnet, dass**
das Temperieren während einer Verweilzeit von 1 Min. bis 2 Std., bevorzugt von 5 Min. bis 90 Min. und besonders bevorzugt von 5 Min. bis 60 Min erfolgt.

13. Beschichtete Granulatpartikel, deren Oberfläche eine auf Temperaturen zwischen 200°C und 800°C erhitzte Beschichtung aus einer Bindemittelzubereitung, welche mindestens ein organisches Lösemittel und mindestens ein hybrides Bindemittel umfasst, aufweist.

14. Verwendung von beschichteten Granulatpartikeln nach Anspruch 13 als Füllstoff in anorganischer oder organischer Matrix wie Gießmassen und/oder Verbundwerkstoffen.
